# EUROPÄISCHE PATENTSCHRIFT

(11) **EP 0 676 179 B1**
(45) Veröffentlichungstag und Bekanntmachung des Hinweises auf die Patenterteilung: **03.05.2000**
(21) Anmeldenummer: 95102381.1
(22) Anmeldetag: 21.02.1995
(51) Int. Cl.: A61C 8/00, A61K 6/06, A61L 27/00

(54) **Dentalimplantat**
Dental implant
Implant dentaire

(30) Priorität: 10.03.1994 DE 4407993
(43) Veröffentlichungstag der Anmeldung: 11.10.1995
(73) Patentinhaber: FRIADENT GmbH, 68229 Mannheim (DE)
(72) Erfinder: Vizethum, Freimut , Dr. Ing., D-68723 Schwetzingen (DE); Bergner, Norbert, D-68165 Mannheim (DE)
(74) Vertreter: Klose, Hans, Dipl.-Phys.

(56) Entgegenhaltungen:
- EP-A- 0 211 676
- WO-A-92/05745
- DE-A- 1 943 801
- DE-A- 2 632 932

## Beschreibung

Die Erfindung bezieht sich auf ein Dentalimplantat. Ein Dentalimplantat gemäß den im Oberbegriff des Patentanspruchs 1 angegeben Merkmalen ist aus der DE-A-26 32 932 bekannt.

Aus der US-A-5 199 873 ist ein Dentalimplantat bekannt, welches ein im Kiefer verankerbares Pfostenteil enthält. Das Pfostenteil ist als Stufenschraube mit mehreren Stufenteilen ausgebildet, deren jeweilige Durchmesser in Richtung zum apikalen Ende kleiner werden. Mit dem Pfostenteil ist ein Aufbauteil für eine Suprastruktur oder einen Kronenaufbau verbindbar. Es handelt sich um ein zweiteiliges Dentalimplantat, bei welchem zunächst das Pfostenteil in den Kiefer implantiert wird und nach einer Einheilphase von drei bis vier Monaten das Aufbauteil eingesetzt und die endgültige prothetische Versorgung durchgeführt wird. Bei einem derartigen Dentalimplantat liegt der Schleimhautdurchtritt regelmäßig im Bereich des Aufbauteils.

Dentalimplantate bestehen oftmals aus Metall, und zwar insbesondere aus Titan oder einer Titanlegierung. Derartige Metalle weisen eine vergleichsweise dunkle "metallische" Oberfläche auf. Da die Farbe des Implantats wesentlich dunkler ist als die des Zahnersatzes oder der Gingiva können im Bereich des Gingivadurchtritts Probleme hinsichtlich der Sichtbarkeit bzw. Wahrnehmbarkeit sich ergeben. So kann, vor allem bei dünner Ausbildung des Zahnersatzes im Bereich des Gingivadurchtritts das dunkle Metall durch den Zahnersatz hindurchschimmern und so nachteilig von außen her sichtbar sein. Desweiteren können vor allem im Hinblick auf Langzeiteffekte, wie vor allem Rückbildung der Gingiva, aufgrund des sichtbar werdenden Dentalimplantats diesbezügliche Probleme auftreten oder vergrößert werden. Die Sichtbarkeit des Dentalimplantats führt zu entsprechenden ästhetischen Problemen, so daß gegebenenfalls ein vollständiger Austausch erforderlich werden kann.

Ferner ist aus der DE-A-33 28 905 eine Zahnprothese bekannt, deren Grundlage aus einer festen korrosionsbeständigen Metallegierung besteht, auf welcher mindestens eine dekorative Außenschicht aus einem festeren Material als die Grundlage angeordnet ist. Diese Außenschicht enthält unter anderem Monoxide der Metalle der Nebengruppe der vierten Gruppe des Periodensystems, und zwar insbesondere Titan- und/oder Zirkonium. Das Verhältnis der Stärke der dekorativen Außenschicht zur Stärke der Grundlage liegt zwischen 1:10 bis 1:200. Mit dieser Zahnprothese soll der Verbrauch von Edelmetallen verringert werden, wobei für die Prothesengrundlage eine vergleichsweise kostengünstige Chrom-Cobalt-Legierung, ein Chrom-Nickel-Stahl oder dergleichen zum Einsatz gelangen. Bei einer derart geschichteten Prothese besteht jedoch die Gefahr, daß die dekorative Außenschicht aufgrund von Mikroporen oder Mikrorissen oder lokaler Abnutzung beschädigt wird und unter Einwirkung der Flüssigkeit der Mundhöhle lokale mikrogalvanische Zellen zwischen der Grundlage und der dekorativen Außenschicht entstehen. Die Folge sind das Auftreten und die Entwicklung von Korrosionsherden, welche zu einer Beschädigung oder gar Zerstörung der Zahnprothese führen können. Es kann im Hinblick auf derartige Probleme zwischen der Grundlage und der dekortiven Außenschicht eine geschlossene Schutzschicht vorgesehen werden, doch wird insoweit der Fertigungsaufwand erheblich vergrößert.

Schließlich ist aus der DE-A-40 39 248 ein Dentalimplantat mit einem Durchführungsteil im Bereich der Gingiva bekannt. Das Durchführungsteil besitzt eine Gesamthöhe etwa entsprechend der Dicke der Gingiva. Durch die Ausbildung des Durchführungsteils oder zumindest eines Teils von dessen Umfangs-Oberfläche mit einem Material mit metallischer oder nahezu metallischer Elektronenleitfähigkeit soll dort der Ansatz von nativen Makromolekülen zumindest stark reduziert werden und eine Schädigung der Gingiva vermieden werden. Das Durchführungsteil oder ein entsprechender Durchführungsabschnitt des Implantats kann ferner bis maximal 15 % der Gesamthöhe mit einem Halbleitermaterial beschichtet werden, damit für das Zahnfleisch ein dichter für Bakterien undurchdringlicher Abschluß ermöglicht wird.

Der Erfindung liegt daher die Aufgabe zugrunde, das Dentalimplantat der genannten Art dahingehend weiterzubilden, daß mit geringem Aufwand seine Sichtbarkeit reduziert wird. Das Dentalimplantat soll den Anforderungen der Praxis entsprechen, und zwar vor allem hinsichtlich der Biokompatibilität.

Die Lösung dieser Aufgabe erfolgt gemäß den kennzeichnenden Merkmalen des Patentanspruchs 1.

Das erfindungsgemäß vorgeschlagene Dentalimplantat kann ohne besondere Schwierigkeiten gefertigt werden und weist zumindest im Bereich der Gingiva außen eine Oxidschicht auf, deren Farbe heller ist als die des Metalls oder der Metallegierung des Dentalimplantats. Die Oxidschicht besteht aus dem gleichen Metall bzw. der gleichen Metallegierung wie das Dentalimplantat, dessen Oberfläche durch Oxidation in die erfindungsgemäße Oxidschicht überführt wurde. Vor der Oxidation wird die Oberfläche zumindest im Bereich der aufzubringenden Oxidschicht geglättet, damit danach die Oxidschicht gleichfalls eine glatte Oberfläche aufweist, daß ein dichtes Anwachsen der Gingiva ermöglicht und andererseits der Anlagerung von Zahnbelag oder Zahnstein vermieden wird. Es ist von besonderer Bedeutung, daß die Oberfläche elektrisch praktisch nicht leitend ist und eine verbesserte elektrochemische Neutralität ebenso erreicht wird wie eine Minimierung elektrochemischer Potentiale. Die Oxidschicht wird durch anodische Oxidation hergestellt, wobei durch Vorgabe der Schichtdicke auf die Farbe Einfluß genommen wird. Die Oxidschicht an der Oberfläche des Dentalimplantats wird in zweckmäßiger Weise durch anodische Oxidation erzeugt, wobei die Schichtdicke definiert im Hinblick auf die Farbgebung vorgegeben wird. Es hat sich als besonders zweckmäßig erwiesen, die Schichtdicke derart vorzugeben, daß die Farben gelb bis rot erzeugt werden, also erfindungsgemäß ähnlich der Farbe der Schleimhaut. Die erfindungsgemäße Oxidschicht erscheint durch Absorptionseffekte in einer Farbe ähnlich der der Schleimhaut und entspricht somit den besonderen ästhetischen Anforderungen, wobei das Dentalimplantat praktisch "unsichtbar" ist. Die farbige Oxidschicht weist im wesentlichen die gleiche Biokompatibilität wie das sauerstoffaffine Metall oder die Metallegierung des Dentalimplantats auf.

Die schleimhautfarbene Oxidschicht weist eine glatte Oberfläche auf und ermöglicht somit ein dichtes Anwachsen der Gingiva und verhindert somit das Eindringen von Bakterien. Um eine möglichst gleichmäßige Farbgebung der Schicht zu erreichen, wird vor der Oxidation zumindest der für die Oxidschicht vorgesehene Bereich einem Ätzvorgang unterworfen, wobei auch Verunreinigungen entfernt werden. Hierdurch wird ein gleichmäßiger Schichtaufbau durch die Anodisation und somit eine gleichmäßige Farbe der Oxidschicht gewährleistet. Ferner wird durch das Ätzen vor der Anodisation eine gleichmäßige glatte Oberfläche der Oxidschicht gewährleistet. Der Rauhigkeitswert Ra nach der Anodisation ist kleiner als 1 Mikrometer, insbesondere kleiner als 0,7 Mikrometer und vorzugsweise kleiner als 0,5 Mikrometer. Das Dentalimpantat besteht aus Titan oder einer Titanlegierung, wobei die Schichtdicke der Oxidschicht zwischen 200 bis 500 nm liegt, so daß aufgrund der Absorptionseffekte das Dentalimplantat entsprechend in den Farben gelb bis rot erscheint.

Besondere Ausgestaltungen und Weiterbildungen der Erfindung sind in den Unteransprüchen und in der nachfolgenden Beschreibung eines Ausführungsbeispieles näher erläutert.

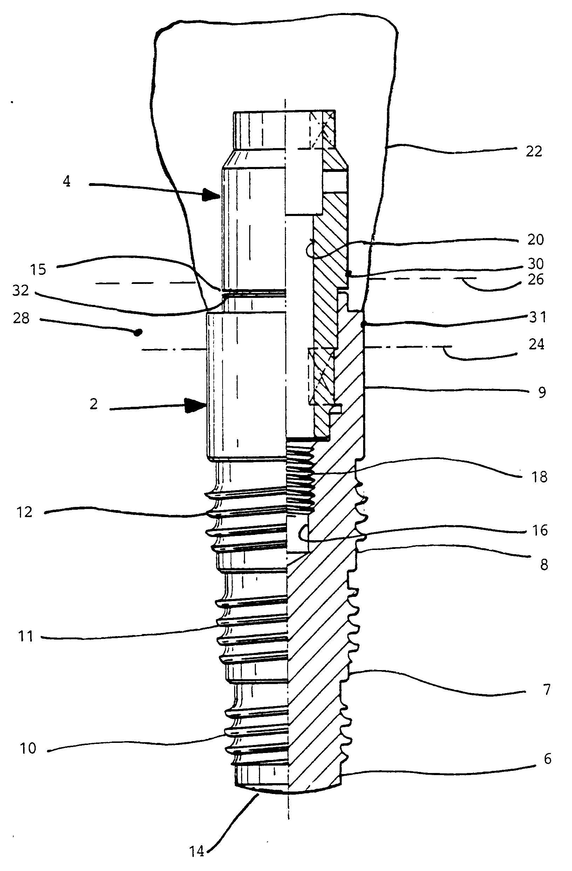

Die Zeichnung zeigt teilweise in einer Ansicht und teilweise in einem axialen Schnitt ein zweiteiliges Dentalimplantat mit einem Pfostenteil 2 und einem Aufbauteil 4. Das Pfostenteil 2 und ebenso das Kopf- oder Aufbauteil 4 bestehen aus Metall, und zwar insbesondere Titan oder einer Titanlegierung. Das Pfostenteil ist als Stufenschraube ausgebildet und enthält drei Stufen 6 bis 8, welche jeweils ein selbstschneidendes Gewinde 10 bis 12 mit gleicher Steigung aufweisen. Die dem apikalen Ende 14 nächstliegende Stufe 6 besitzt den kleinsten Durchmesser. Die dem Aufbauteil 4 nächstliegende Stufe 9 weist hingegen eine glatte zylindrische Außenfläche auf. Das Pfostenteil 2 besitzt am koronalen Ende 15 eine Innenbohrung 16, in welche das Kopf- oder Aufbauteil 4 teilweise eingesetzt ist und welche ferner ein Innengewinde 18 enthält. Mit einer hier nicht weiter dargestellten Schraube, welche durch eine Durchgangsbohrung 20 des Aufbauteils 4 hindurchgeführt und in das Innengewinde 18 eingeschraubt ist, erfolgt die Verbindung des Aufbauteils 4 mit dem Pfostenteil 2. Mit dem Aufbauteil 4 kann in bekannter Weise eine Krone 22 oder dergleichen verbunden werden.

Es sei an dieser Stelle bemerkt, daß die Erfindung nicht nur Dentalimplantate mit separaten Pfostenteil und Aufbauteil umfaßt, sondern auch sogenannte einteilge Dentalimplantate. Diese einteiligen Dentalimplantate besitzen anstelle eines separaten Aufbauteils ein integral an das Pfostenteil angeformtes Kopfteil, so daß letztendlich ein einziges Bauteil vorliegt.

Mittels der strichpunktierten Linie 24 ist die Kante des Kieferknochens angedeutet, während mit der gestrichelten Linie 26 die Oberfläche der Gingiva schematisch angedeutet ist. In diesem Durchtrittsbereich 28 weist die Außenfläche des Aufbauteils 4 eine Oxidschicht 30 auf, welche durch anodische Oxidation erzeugt worden ist und eine definierte Schichtdicke aufweist. Die Schichtdicke ist derart vorgegeben, daß durch Absorbtionseffekte die Außenfläche "fleischfarben" und/oder in gelber bis roter Farbe sichtbar ist. Vor Durchführung der Anodisation erfolgte eine Reinigung der Oberfläche des Aufbauteils 4, und zwar insbesondere durch Ätzen oder Beizen, so daß eine weitgehend gleichmäßge Schichtdicke bei der Anodisation erzeugt und letztendlich eine definierte gleichmäßige Farbe vorgegeben wird. Die Oxidschicht 30 besteht aus dem gleichen Material wie das Aufbauteil und ist auf dessen Außenfläche durch Oxidation erzeugt worden. Ein Abplatzen, der Ausbildung von Mikrorissen oder sonstigen Beschädigungen der Oxidschicht 30 ist nicht zu befürchten. Wie ersichtlich, ist das Aufbauteil von der Krone 22 eingeschlossen, so daß die Oxidschicht 30 des Aufbauteils praktisch keiner Abnutzung, beispielsweise beim Kauen, unterliegt.

Bei dem dargestellten zweiteiligen Dentalimplantat ist die Oxidschicht 30 an der Außenfläche des Aufbauteils 4 von dessen Unterkante 32 aus zur Krone hin entsprechend dem Gingivadurchtrittsbereich 28 vorgesehen. Selbstverständlich kann auch das gesamte Aufbauteil 4 mit einer derartigen Oxidschicht versehen sein, so daß bei der anodischen Oxidation hinsichtlich der Vorgabe der Größe der Oxidschicht keine besonderen Maßnahmen getroffen werden müssen. Desweiteren kann im Rahmen der Erfindung auch das im Kiefer zu verankernde Pfostenteil 2 zumindest teilweise mit der erfindungsgemäßen Oxidschicht 31 versehen sein. Es versteht sich, daß bei einem einteiligen Dentalimplantat, das Pfostenteil mit dem integrierten Aufbau- und Kopfteil erfindungsgemäß zumindest im Bereich des Gingivadurchtritts 28 mit der farbigen Oxidschicht versehen ist.

Durch die Beschreibung des zweiteiligen Dentalimplantats, dessen Pfostenteil als Stufenschraube ausgebildet ist, erfolgt keinerlei Einschränkung der Erfindung. Unabhängig von der jeweiligen konkreten Ausgestaltung des Dentalimplantats kommt es darauf an, daß zumindest im Bereich des Gingivadurchtritts des Dentalimplantats, dessen Oberfläche mit einer Oxidschicht versehen ist, deren Farbe der Schleimhaut angepaßt ist. Der Werkstoff für das Dentalimplantat besteht in aus Titan oder einer Titanlegierung.

### Bezugszeichen

- 2: Pfostenteil
- 4: Aufbauteil
- 6 bis 9: Stufe
- 10 bis 12: Gewinde
- 14: apikales Ende
- 15: koronales Ende
- 16: Bohrung in 2
- 18: Innengwinde
- 20: Durchgangsbohrung in 4
- 22: Krone
- 24: strichpunktierte Linie
- 26: gestrichelte Linie
- 28: Durchtrittsbereich
- 30, 31: Oxidschicht
- 32: Unterkante von 4

## Patentansprüche

1. Dentalimplantat mit einem im Kiefer verankerbaren Pfostenteil (2), mit welchem ein Aufbauteil (4) integral oder mit zusätzlichen Mitteln verbunden ist, wobei der Pfostenteil und der Aufbauteil aus Titan oder einer Titanlegierung bestehen, enthaltend einen dem Gingivadurchtritt zugeordneten und mit einer Oxidschicht (30, 31) versehenen Durchtrittsbereich (28), deren Schichtdicke im Hinblick auf eine Farbe entsprechend der der Gingiva definiert vorgegeben ist, wobei die Oberfläche in dem für die Oxidschicht vorgesehenen Bereich vor der Oxidation einem Ätz- oder Beizverfahren unterzogen worden ist,
dadurch gekennzeichnet, daß die Oxidschicht (30, 31) durch anodische Oxidation aus Titan oder der gleichen Titanlegierung wie des Dentalimplantats gebildet ist, daß die Dicke der Oxidschicht (30, 31) zwischen 200 und 500 nm groß ist und daß die Rauhigkeit der Oberfläche der Oxidschicht (30, 31) kleiner als 1 µm beträgt.

2. Dentalimplantat nach Anspruch 1, dadurch gekennzeichnet, daß die Rauhigkeit kleiner als 0,7 µm, vorzugsweise kleiner als 0,5 µm, beträgt.

## Claims

1. Dental implant with a pillar (2), able to be anchored in the jaw, to which a structure (4) is connected integrally or using additional means whereby the pillar and the structure consist of titanium or a titanium alloy, containing a passage area (28), allocated to the gingiva passage and provided with an oxide film (30, 31), whose thickness of film is given as defined with regard to a colour according to the gingiva whereby the surface in the area/zone provided for the oxide film has been subject to a discharge or mordanting technique prior to the oxidation, characterized in that the oxide film (30, 31) has been created from titanium or the same titanium alloy as the dental implant by anodic oxidation, that the thickness of the oxide film (30, 31) has a size between 200 and 500 nm, and that the coarseness of the surface of the oxide film (30, 31) amounts to less than 1 µm.

2. Dental implant according to claim 1 characterized in that the coarseness amounts to less than 0.7 µm, preferable to less than 0.5 µm.

## Revendications

1. Implant dentaire comprenant une tige (2) ancrable dans la mâchoire et à laquelle une surstructure (4) est raccordée d'un seul tenant ou avec des moyens supplémentaires, la tige et la surstructure étant fabriquées en titane ou dans un alliage de titane, comprenant encore une zone de passage (28) correspondant au passage gingival et revêtue d'une couche d'oxyde (30, 31) dont l'épaisseur est définie préalablement en fonction d'une teinte correspondant à celle de la gencive, la surface ayant été soumise avant l'oxydation à un procédé de décapage ou de mordançage dans la zone prévue pour la couche d'oxyde, caractérisé en ce que la couche d'oxyde (30, 31) est formée par oxydation anodique de titane ou du même alliage de titane que l'implant dentaire, en ce que l'épaisseur de la couche d'oxyde (30, 31) est comprise entre 200 et 500 nm et en ce que la rugosité de la surface de la couche d'oxyde (30, 31) est inférieure à 1 µm.

2. Implant dentaire selon la revendication 1, caractérisé en ce que la rugosité est inférieure à 0,7 µm, de préférence inférieure à 0,5 µm.
